# EUROPÄISCHE PATENTANMELDUNG

(11) **EP 0 757 494 A2**
(43) Veröffentlichungstag der Anmeldung: **05.02.1997**
(21) Anmeldenummer: 96202175.4
(22) Anmeldetag: 01.08.1996
(51) Int. Cl.: H04N 7/52

(54) **Verfahren zur Übertragung bzw. Aufzeichnung von digitalen Daten und Schaltungsanordnung hierfür**

(30) Priorität: 02.08.1995 DE 19528277
(71) Anmelder: Philips Patentverwaltung GmbH, 22335 Hamburg (DE); PHILIPS ELECTRONICS N.V., 5621 BA Eindhoven (NL)
(72) Erfinder: Dworatzek, Manfred, Philips Patentverwaltung GmbH, 22335 Hamburg (DE)
(74) Vertreter: Volmer, Georg, Dipl.-Ing.

(57) **Zusammenfassung**

Es wird ein Verfahren zur Übertragung bzw. Aufzeichnung von digitalen Daten vorgeschlagen, wobei mehrere, unterschiedliche Datenmengen aufweisende digitale Datenströme zu einem gemeinsamen Datenstrom kombiniert werden.

Um dieses Verfahren besonders wirtschaftlich durchführen zu können, werden die Daten eines jeden Datenstromes in Blöcke mit einer vorher zu bestimmenden Anzahl von Wörtern einer bestimmten Wortbreite gepackt und diese Blöcke werden miteinander verschachtelt.

## Beschreibung

Die Erfindung betrifft ein Verfahren zur Übertragung bzw. Aufzeichnung von digitalen Daten, wobei mehrere, unterschiedliche Datenmengen aufweisende digitale Datenströme zu einem gemeinsamen Datenstrom kombiniert werden und wobei ein Start- und Blockquantitätssignal am Anfang dieses gemeinsamen Datenstromes eingefügt wird.

Um mehrere digitale Datenströme möglichst schnell und wirtschaftlich übertragen bzw. speichern zu können, hat es sich als zweckmäßig erwiesen, diese Datenströme zu komprimieren und zu einem gemeinsamen Datenstrom zu kombinieren.

So ist beispielsweise in der EP 0 558 183 A2 bereits eine Einrichtung zur Übertragung oder Speicherung von digitalen Videosignalen beschrieben, welche eine Luminanz- und eine Chrominanzkomponente umfassen. Diese jeweils ein Bild repräsentierenden digitalen Luminanz- und Chrominanzdaten werden nach der Kompression in je eine Datenfolge kompressionsabhängiger Länge geformt und aneinander gefügt. Jede Datenfolge umfaßt demnach eine Luminanzdatensektion, eine Chrominanzdatensektion sowie ein Startsignal, welches wiederum eine Startadresse und ein sogenanntes Luminanz/Chrominanz-Grenzsignal enthält. Für dieses so geformte Daten-Blocksignal wird für die Übertragung und Dekompression eine große Verzögerungszeit benötigt, da die Daten der einen Komponente zunächst vollständig so lange gespeichert werden müssen, bis auch die Daten der anderen Komponenten gleichzeitig zur Verfügung stehen. Damit ist aber auch ein hoher Speicherbedarf verbunden.

Der vorliegenden Erfindung liegt daher die Aufgabe zugrunde, ein Verfahren der eingangs genannten Art anzugeben, bei welchem die Datenblöcke einfach zu erzeugen und schnell zu dekomprimieren sind.

Die Lösung dieser Aufgabe ist dadurch möglich, daß die Daten eines jeden Datenstromes in Blöcke mit einer vorher zu bestimmenden Anzahl von Wörtern einer bestimmten Wortbreite gepackt werden, daß die Blöcke jedes Datenstromes mit einem festen Raster abwechselnd in den gemeinsamen Datenstrom eingegeben werden und daß ab dem Nichtvorhandensein von Daten eines der Datenströme die Daten des oder der anderen Datenströme weiterhin in Blöcken kontinuierlich in den gemeinsamen Datenstrom eingegeben werden.

Das erfindungsgemäße Verfahren hat den Vorteil, daß die Datenblöcke ohne größeren Speicheraufwand dekomprimiert werden können, wodurch die Daten der einzelnen Komponenten unmittelbar zur Verfügung stehen.

Durch die in den Unteransprüchen aufgeführten Maßnahmen sind vorteilhafte Weiterbildungen und Verbesserungen des im Hauptanspruch angegebenen Verfahrens möglich. In einem weiteren Unteranspruch ist eine vorteilhafte Schaltungsanordnung zur Durchführung des Verfahrens angegeben.

Ein Ausführungsbeispiel der Erfindung ist in der Zeichnung dargestellt und in der nachfolgenden Beschreibung näher erläutert.

Es zeigen:
- Fig. 1: ein Blockschaltbild zur Durchführung des erfindungsgemäßen Verfahrens,
- Fig. 2: ein in Fig. 1 erzeugter gemeinsamer Datenstrom.

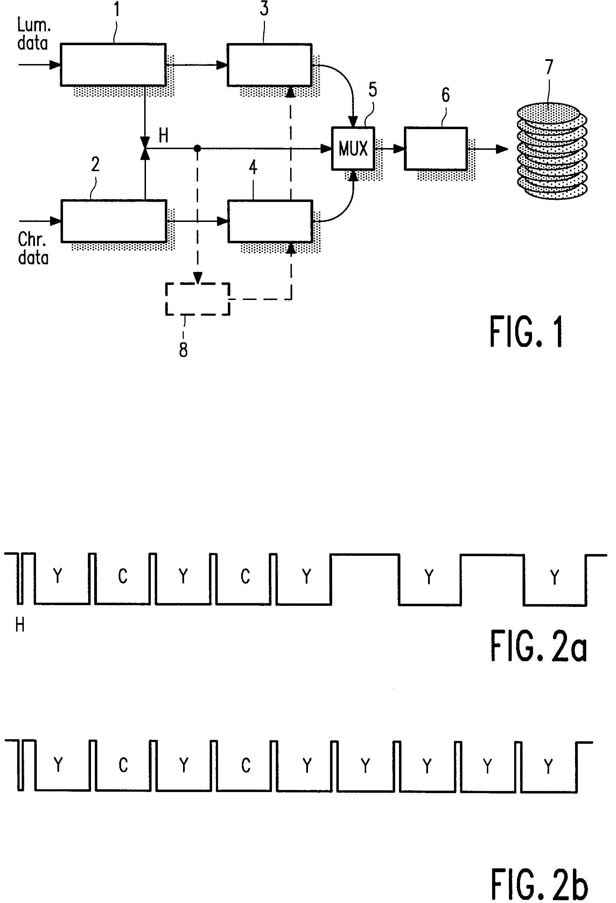

In Fig. 1 ist ein Blockschaltbild zur Erzeugung eines (in Fig. 2 gezeigten) gemeinsamen Datenstromes dargestellt. Dazu werden die von einem digitalen Videosignal abgeleiteten Luminanz- und Chrominanzdaten je einer Kompressionsschaltung 1 bzw. 2 zugeführt, an deren Ausgängen je ein digitaler Datenstrom dieser Komponenten abnehmbar ist. Je nach Bildinhalt entstehen dabei nach einer Kompression mit variabler Datenrate unterschiedliche Datenmengen für die Daten von Luminanz und Chrominanz. Die Daten jedes Datenstromes werden in Blöcke mit einer gewissen Anzahl von Wörtern mit einer bestimmten Wortbreite gepackt. Bei der Übertragung von Luminanz- und Chrominanzdaten hat es sich als vorteilhaft herausgestellt, pro Block beispielsweise sechzehn Wörter mit einer Wortbreite von 32 Bit zu verwenden. Wenn keine Daten mehr zur Verfügung stehen, wird der letzte Block eines komprimierten Teilbildes mit sogenannten Füllbits auf eine ganze Blockgröße (also auf 16 Wörter à 32 Bit) aufgefüllt. So kann ein Teilbild aus m Blöcken Luminanzdaten und n Blöcken Chrominanzdaten bestehen. Diese Datenströme werden je einem Speicher 3 bzw. 4 zur Zwischenspeicherung zugeführt.

Für die bildweise Übertragung bzw. Aufzeichnung ist es nun notwendig, diese beiden (gespeicherten) Datenströme in einem Format zu kombinieren. Dazu werden die Datenströme einem Multiplexer 5 zugeführt. Um einen gemeinsamen Datenstrom zu erzeugen, wird zunächst zu Beginn jedes Teilbildes ein von den komprimierten Luminanz- und Chrominanzdaten abgeleitetes Block-Startsignal mit einem Blockquantitätssignal (im Englischen "Header" genannt) dem einen Eingang des Multiplexers 5 zugeführt, danach werden die Luminanzdaten sowie die Chrominanzdaten blockweise abwechselnd von den Speichern 3 und 4 den anderen Eingängen des Multiplexers 5 zugeleitet.

Somit entsteht ein gemeinsamer Datenstrom mit einem Signalverlauf gemäß Fig. 2a, welcher beginnend mit einem Startsignal H, in dem die Zahl m der Blöcke für die Luminanzdaten und n für die Chrominanzdaten enthalten sind, danach abwechselnd je einen Block für die Luminanzdaten Y und für die Chrominanzdaten C aufweist.

Sind in einem der beiden Datenströme keine Daten mehr vorhanden, so können die Daten des anderen Datenstromes weiter im festen Raster in den gemeinsamen Datenstrom geschrieben werden. Dieser gemeinsame Datenstrom am Ausgang des Multiplexers 5 wird nun noch einem Pufferspeicher 6 zugeführt. Am Ausgang des Pufferspeichers 6 kann dann ein in Blöcken für die Luminanz- und die Chrominanzdaten aufgeteilter kontinuierlicher, d.h. ohne Lücken erzeugter, gemeinsamer Datenstrom gemäß Fig. 2b abgenommen und beispielsweise einem Plattenaufzeichnungssystem 7 zugeführt werden.

Selbstverständlich wäre es auch denkbar, den Pufferspeicher einzusparen, wenn die Auslese der Zwischenspeicher 3 und 4 mit Hilfe einer Steueranordnung 8 in entsprechender Sequenz gemäß Fig. 2b direkt erfolgt.

Der Lese- oder Demultiplexvorgang eines solchen gemeinsamen Datenstromes wird nun invers zum Multiplexvorgang durchgeführt. Die im Plattensystem 7 gespeicherten Datenblöcke werden daher abwechselnd dem Luminanz- und dem Chrominanzkanal zugeordnet. Aus dem Startsignal H am Anfang des gemeinsamen Datenstromes ergibt sich die Anzahl der Blöcke, nach der Daten nur noch dem einen Datenstrom zuzuordnen sind. Der Lesevorgang kann ab der Grenze des Übergangs von zwei Datenströmen zu einem einzigen Datenstrom entweder im festen Raster, d.h. mit Unterbrechnungen durch "leere" Blöcke oder aber weiterhin in Blöcken kontinuierlich erfolgen.

## Patentansprüche

1. Verfahren zur Übertragung bzw. Aufzeichnung von digitalen Daten, wobei mehrere, unterschiedliche Datenmengen aufweisende digitale Datenströme zu einem gemeinsamen Datenstrom kombiniert werden und wobei ein Start- und Blockquantitätssignal am Anfang dieses gemeinsamen Datenstromes eingefügt wird,
dadurch gekennzeichnet,
daß die Daten eines jeden Datenstromes in Blöcke mit einer vorher zu bestimmenden Anzahl von Wörtern einer bestimmten Wortbreite gepackt werden, daß die Blöcke jedes Datenstromes mit einem festen Raster abwechselnd in den gemeinsamen Datenstrom eingegeben werden und daß ab dem Nichtvorhandensein von Daten eines der Datenströme die Daten des/der anderen Datenströme weiterhin in Blöcken kontinuierlich in den gemeinsamen Datenstrom eingegeben werden.

2. Verfahren nach Anspruch 1,
wobei die digitalen Daten digitale Videosignale sind, von denen der eine Datenstrom die Luminanzkomponente und der andere Datenstrom die Chrominanzkomponente enthält,
dadurch gekennzeichnet,
daß für die bildweise Übertragung bzw. Aufzeichnung beide Datenströme zu einem gemeinsamen Datenstrom kombiniert werden, daß der gemeinsame Datenstrom blockweise abwechselnd die Luminanz- und die Chrominanzkomponente aufweist, daß nach dem Ende der Daten für die Chrominanzkomponente oder für die Luminanzkomponente nur noch die Daten der anderen Komponente weiterhin in Blöcken kontinuierlich in den gemeinsamen Datenstrom eingegeben werden.

3. Verfahren nach Anspruch 2,
dadurch gekennzeichnet,
daß alle Blöcke gleich groß sind und der letzte Block einer Komponente für ein Halbbild oder Vollbild bei Nichtvorhandensein von Daten zur definierten Blockgröße aufgefüllt wird.

4. Schaltungsanordnung zur Durchführung des Verfahrens nach Anspruch 1 mit mehreren Kompressionsschaltungen (1, 2) zur Komprimierung der einzelnen Datenströme, mit je einem nachfolgenden Speicher (3, 4) zur Erzeugung der Blöcke für jeden Datenstrom, mit einem Multiplexer (5) für die Kombination der komprimierten und in Blöcke unterteilten Datenströme zu einem gemeinsamen Datenstrom sowie zur Hinzufügung des Startsignals und mit einem anschließenden Pufferspeicher (6), an dessen Ausgang der gemeinsame Datenstrom kontinuierlich angeordneter Datenblöcke für die Übertragung bzw. Aufzeichnung abnehmbar ist.
